# EUROPÄISCHE PATENTSCHRIFT

(11) **EP 2 753 843 B1**
(45) Veröffentlichungstag und Bekanntmachung des Hinweises auf die Patenterteilung: **23.11.2016**
(21) Anmeldenummer: 12748219.8
(22) Anmeldetag: 16.08.2012
(51) Int. Cl.: F16D 65/18

(54) **KOLBEN FÜR EINEN BREMSSATTEL EINER SCHEIBENBREMSE**
PISTON FOR A BRAKE CALIPER OF A DISK BRAKE
PISTON POUR UN ÉTRIER DE FREIN À DISQUE

(30) Priorität: 06.09.2011 DE 102011082144; 29.02.2012 DE 102012203162
(43) Veröffentlichungstag der Anmeldung: 16.07.2014
(73) Patentinhaber: Continental Teves AG & Co. oHG, 60488 Frankfurt (DE)
(72) Erfinder: LEIDECKER, Norbert, 65760 Eschborn (DE); WÜRZ, Matthias, 61440 Oberursel (DE); BALZ, Jürgen, 65510 Hünstetten-Oberlibbach (DE); FÜLLER, Dieter, 64569 Nauheim (DE)
(86) Internationale Anmeldenummer: PCT/EP2012/066035
(87) Internationale Veröffentlichungsnummer: WO 2013/034417

(56) Entgegenhaltungen:
- DE-A1-102007 051 456
- DE-A1-102009 017 167
- DE-A1-102010 030 277
- US-A1- 2011 048 869

## Beschreibung

Die Erfindung betrifft einen Kolben für einen Bremssattel einer Scheibenbremse, welcher in Umformprozessen aus einem metallischen Werkstoff, insbesondere aus einem ebenen Blech, hergestellt ist, mit den Merkmalen vom Oberbegriff vom Patentanspruch 1. Der Kolben ist als einseitig offener Topf mit einer Längsachse, einer Wandung und einem Kolbenboden ausgebildet. Ein solcher Kolben ist in einem Zylinder des Bremssattels entlang der Längsrichtung verschiebbar gelagert und kann im Bereich des Kolbenbodens mit einer axialen Anlagefläche an einen Bremsbelag angelegt werden. Wird der Kolben von einem Hydraulikfluid mit Druck beaufschlagt, so verschiebt sich der Kolben in dem Zylinder und presst den Bremsbelag an eine Bremsscheibe. Weiterhin kann der Kolben auch mechanisch mittels einer Antriebsmutter beaufschlagt werden.

Ein Kolben ist aus der WO 2007/036357 A1 bekannt. Dabei ist der Kolben in einer Scheibenbremse elektromechanisch und hydraulisch verschiebbar vorgesehen. Im Falle einer elektromechanischen Betätigung wird eine Antriebsspindel durch einen Elektromotor über ein Getriebe in Rotation versetzt. Die Antriebsspindel steht mit einer Antriebsmutter in Eingriff, die in dem Kolben verdrehsicher angeordnet ist. Dadurch ist die Kolben-Antriebsmutter-Einheit axial im Zylinder verschiebbar. Die Antriebsmutter ist axial an eine Konusfläche im Kolben anlegbar, und überträgt so die axiale Verschiebung auf den Kolben und den Bremsbelag.

Ein Kolben für eine Bremse mit einer integrierten Armierung zum Schutz gegen plastische Deformation infolge von Winkel-Fehlstellung zum Schutz einer Kraftangriffsfläche geht aus der DE 10 2010 030277 A1 hervor.

Bei den sogenannten kombiniert betätigbaren Feststellbremssätteln von Feststellbremsanlagen unterscheidet man grundsätzlich konventionelle Bremssattelausführungen, enthaltend eine mechanische Betätigungsvorrichtung mit einer integrierten, teleskopierbaren Vorrichtung zum sukzessiven Ausgleich von Bremsbelagverschleiß. Dabei erfordert jeder Austausch von verschlissenen Bremsbelägen eine manuelle Rückstellung, indem eine mechanische Rückdrehbewegung am Kolben vorgenommen wird, so dass ein Gewindemittel der Nachstellvorrichtung in eine Ausgangsposition zurück gedreht wird. Im Ergebnis wird der Bremskolben dadurch in eine rückwärtige Endlage versetzt, und die neuen Bremsbeläge können montiert werden.

Daneben gibt es Sattelausführungen mit einem sattelintegrierten, elektromechanischen Aktuator (Elektrische Parkbremse), enthaltend einen elektronischen Belagverschleißausgleich, und wobei ein elektronischer Modus angeboten wird, um den Aktuator elektromechanisch in eine vorgegebene Bremsbelagwechselposition zu versetzen. Dadurch entfällt die Notwendigkeit einer manuellen Rückstellung. Dennoch soll die jahrzehntealte manuelle Rückstellmöglichkeit zumindest als Notbehelf erhalten bleiben. Problembehaftet können Situationen sein, in denen bei diesen Bremssätteln, sogar nach Erreichen der rückwärtigen Endlage, weiterhin manuell im Sinne einer fortgesetzten Rückstellbewegung manipuliert wird. Denn eine unnötig fortgesetzte Manipulation fördert lediglich einen unerwünschten Verschleiß, ohne irgendwelche positiven Auswirkungen zu haben. Daher ist - wie bei allen Instandsetzungsarbeiten an einer Bremsanlage - in der Ausführung besondere Sorgfalt und Umsicht erforderlich.

Leider können unautorisierte Bremsbelagwechsel, oder menschliches Fehlverhalten bei einem Bremsbelagwechsel nicht gänzlich ausgeschlossen werden, so dass der Erfindung die Aufgabe zu Grunde liegt, eine Lösung anzugeben, die robust ausgelegt ist, und weitestgehend resistent gegen unautorisierte oder unfachmännisch ausgeführte Bremsbelagwechsel ausgebildet ist.

Die Aufgabe wird durch die Merkmale vom Hauptanspruch dadurch gelöst, indem ein Rand vom Kolben eine asymmetrische Profilierung mit einem oder mehreren Freischnitten auf, während eine Profilierung der Mutter symmetrisch ausgebildet sein kann. Dabei ist die Armierung als asymmetrisch-inkongruente, also geometrisch nicht deckungsgleiche, drehfeste Profilierung, mit wenigstens einem Freischnitt zur Vermeidung unerwünschter Deformation zwischen Kolben und Mutter gestaltet. Erfindungsgemäß wird Verformung, Fressen, Abrieb und ähnlich nachteiliges Verhalten zwischen Verdrehsicherungsmitteln durch fehlertolerant ausgeführte Konstruktion zwangsläufig vermieden.

Weitere Einzelheiten der Erfindung gehen aus Unteransprüchen zusammen mit der Beschreibung anhand der Zeichnung hervor. In der Zeichnung zeigt:

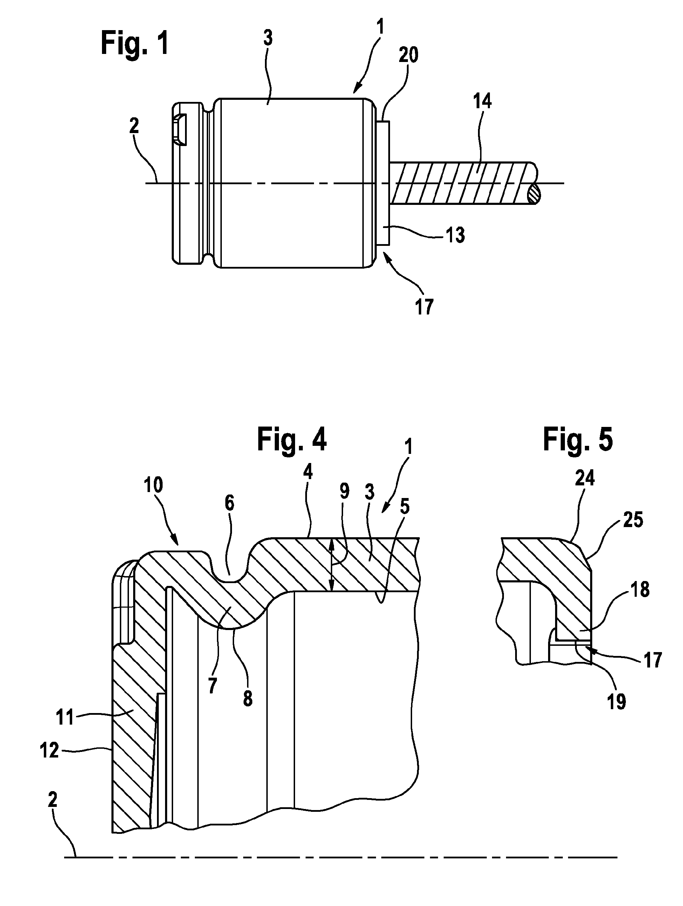

Fig. 1 Ansicht eines bekannten Kolbens zusammen mit einer Antriebsmutter und einer Antriebsspindel,

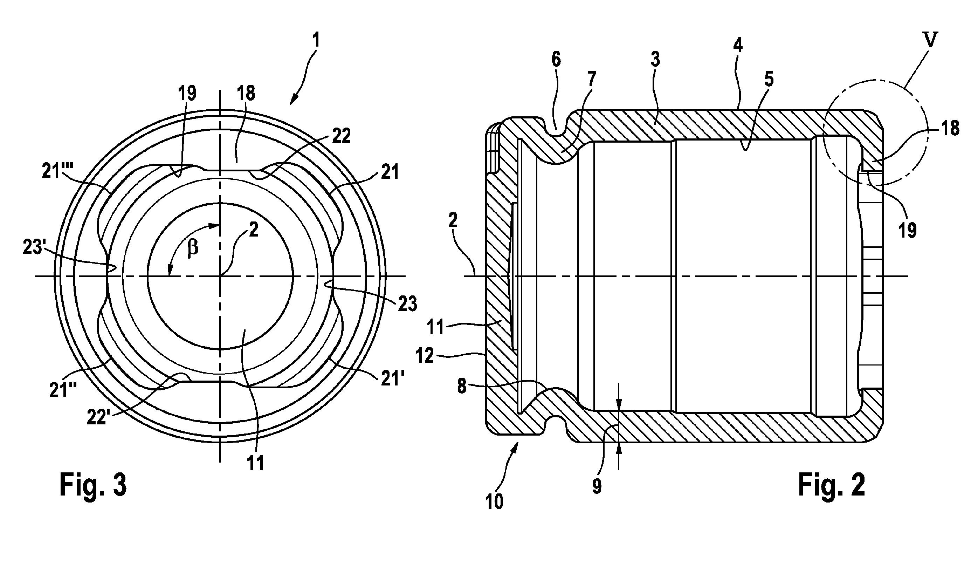

Fig. 2 ein erfindungsgemäßer Kolben vergrößert, und im Schnitt,
Fig. 3 eine Draufsicht auf das offene Ende vom Kolben in Fig. 2,
Fig. 4 vergrößerter Teilausschnitt aus Fig. 2,
Fig. 5 vergrößerter Teilausschnitt aus Fig. 2,

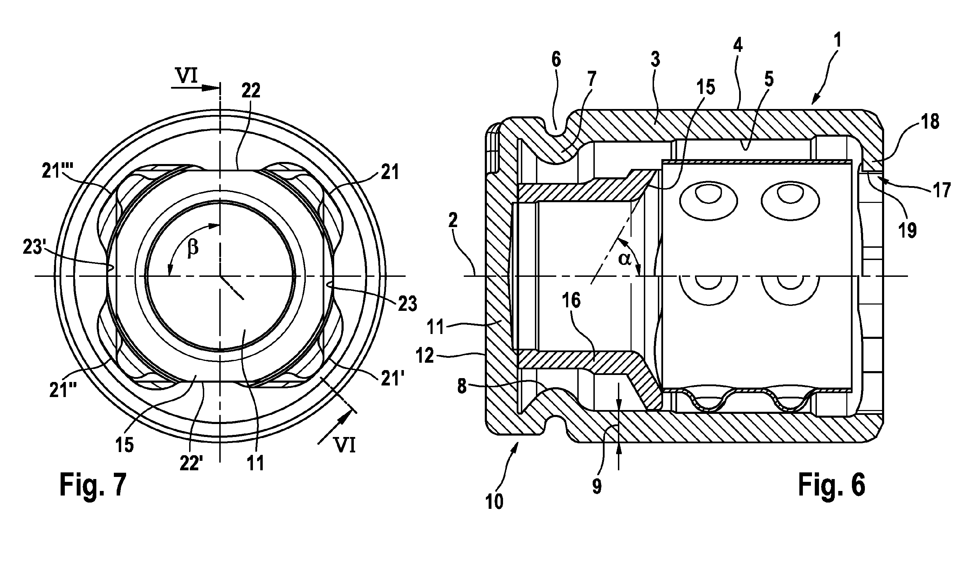

Fig. 6 Kolbenbaueinheit vergrößert, im Schnitt und mit Einsatzteilen, und
Fig. 7 eine Draufsicht auf das offene Ende der Kolbenbaueinheit in Fig. 6.

Ein kombiniert betätigbarer Bremssattel einer elektrohydraulischen Kraftfahrzeugbremse verfügt über einen Kolben 1 mit einer Antriebsspindel 14 und mit einer Antriebsmutter 13. Der Kolben 1 ist als einseitig offener Topf mit einer Wandung 3 und mit einem Kolbenboden 11 gestaltet, wobei der Kolbenboden 11 auf der geschlossenen Seite des Kolbens 1 mit einer axialen Anlagefläche 12 an einen nicht dargestellten Bremsbelag anlegbar ist. In einer Außenseite 4 der Wandung 3, in der Nähe der Anlagefläche 12, ist eine umlaufende Nut 6 einrolliert, welche im verbauten Zustand (Kolben 1 im Bremssattel) zur Aufnahme einer nicht dargestellten Kolbenschutzkappe dient. Die Kontur der einrollierten Nut 6 setzt sich durch den gesamten Querschnitt der Wandung 3 fort und verursacht dadurch auf einer Innenseite 5 der Wandung 3 des Kolbens 1 eine Schulter 7. In dem Kolben 1 ist an einem Einsatzteil 16 (Napf) eine Konusfläche 15 zur axialen Abstützung der konisch gestalteten Antriebsmutter 13 am Kolbenboden 11 vorgesehen. Demzufolge ist der Kolben 1 als mehrstückige Kolbenbaueinheit ausgebildet, die das Einsatzteil 16 aufweist, welches als eigenes Bauteil im Kolben 1 angeordnet, und vorzugsweise durch Umformung aus einem ebenen Blech erhalten wird. Das napfartige Einsatzteil 16 stützt sich axial flach an dem Kolbenboden 11 ab. Die Konusfläche 15 des Napfs schließt dabei in axialer Richtung gemeinsam mit der Längsachse 2 vorzugsweise einen Winkel α von etwa 60° Grad ein.

Der Kolben 1 und die Antriebsmutter 13 sind bezüglich der Längsachse 2 drehfest miteinander verbunden. Der Kolben 1 oder die Antriebsmutter 13 sind in nicht näher dargestellter Weise in dem Bremssattelgehäuse gegen Verdrehen gesichert.

Bei einer Feststell-Bremsbetätigung der Scheibenbremse wird die in der Antriebsmutter 13 angeordnete Antriebsspindel 14 gedreht. Dies erfolgt zum Beispiel mittels eines Elektromotors anhand von einem nachgeschalteten Getriebe, oder durch einen Hebelmechanismus mit daran angeschlossenem Seil, sowie Hand- oder Zentralaktuatorbetätigung. Da die Antriebsspindel 14 und die Antriebsmutter 13 bevorzugt mit einem Kugelgewinde versehen sind, wird die Rotationsbewegung der Antriebsspindel 14 über das Kugelgewinde mit hohem Wirkungsgrad in eine axiale Verschiebung der Antriebsmutter 13 umgewandelt. Die Antriebsmutter 13 liegt demzufolge an dem Kolben 1 an, und verschiebt diesen. Prinzipiell sind jedoch auch Mutter-Gewindetriebe ohne Verwendung von Wälzkörpern möglich.

Eine erfindungsgemäße Verdrehsicherung 17 zwischen dem Kolben 1 und der Antriebsmutter 13 ist wie folgt realisiert. An einem offenen Ende des Kolbens 1 ist ein nach radial innen weisender Rand 18 mit einer Stirnfläche vorgesehen, die mit einer einstückig angeformten Kontur versehen ist, welche zusammen mit einer Gegenkontur der Antriebsmutter 13 eine formschlüssige Verdrehsicherung 17 zwischen Antriebsmutter 13 und Kolben 1 im Sinne von mehreren formschlüssigen Mitnehmern ausbildet.

Dabei verfügt die Verdrehsicherung 17 zwischen Kolben 1 und Antriebsmutter 13 über eine integrierte Armierung zum Schutz gegen plastische Deformation der beteiligten Mitnehmer. Dabei sind die Mitnehmer bevorzugt paarweise schlüsselflächenartig im Sinne von Kraftangriffsflächen ausgestaltet. Eine Überlastung oder plastische Deformation, beziehungsweise spanabhebende Deformation der Mitnehmer, wird dadurch vermieden. Dabei ist die Armierung bevorzugt als asymmetrischinkongruente, also geometrisch nicht deckungsgleiche, unrunde sowie drehfest profilierte Kontur und Gegenkontur 19,20 der benachbarte Kraftangriffsflächen vorgesehen, und wobei wenigstens ein Freischnitt 21 zur Vermeidung unerwünschter Deformation vorgesehen ist.

Die Verdrehsicherung 17 weist im Bereich vom Rand 18 vom Kolben 1 eine asymmetrische Innenprofilierung mit mehreren kleeblattartig vorgesehenen, großzügigen Freischnitten 21,21',21'',21'" als Freigang für Ecken oder Kanten auf. Eine Gegenkontur 20 mit einer Außenprofilierung der Antriebsmutter 13 kann dagegen symmetrisch ausgebildet sein kann. Weiterhin können sich gegenüberliegende Auflagen, Anlagen und/oder Kraftangriffsflächen zwischen Kolben 1 und Antriebsmutter 13 parallel zueinander erstrecken.

Die Mitnehmer sind bevorzugt als zueinander parallel angeordnete Schlüsselflächenpaare 22,22'gestaltet, und regelmäßig im Winkel (90°) dazu versetzte Stützflächenpaare 23,23'zentrieren die beteiligten Bauteile zusätzlich zueinander. Im Ergebnis wird durch die beschriebene Profilierung eine definierte Anlage zwischen den beteiligten Bauteilen geschaffen, welche Beschädigungen vermeidet. Klappertendenz und Geräuschentstehung wird vorbeugt. Die großräumig an dem Rand 18 angeordneten Freischnitte 21,21',21",21"'ermöglichen einem Fahrzeughersteller eine beschleunigt darstellbare Bremsflüssigkeitsbefüllung des Bremssystems am Montagebandende. Weiterhin wird vorteilhafterweise eine beschleunigte Bremssystementlüftung ermöglicht.

Ausgehend von der konzentrischen Außenseite 4 der Wandung 3 ist der Rand 18 durch einen Radius 24 und eine sich daran anschließende Fase 25 gestaltet, an die sich ein rechtwinklig nach radial innen weisender Abschnitt anschließt, welcher das Einsatzteil 16 zumindest teilweise übergreift.

Die Erfindung betrifft schließlich eine Kolbenbaueinheit aufweisend einen Kolben 1 mit wenigstens einem Einsatzteil 16, und wobei der nach radial innen in Richtung Längsachse 2 weisende Rand 18 das Einsatzteil 16 zumindest teilweise formschlüssig übergreift. Demzufolge dient der Rand 18 ergänzend zur formschlüssigen Lagesicherung von dem Einsatzteil 16 in dem Kolben 1.

**Bezugszeichenliste**

| | | | |
|---|---|---|---|
| | | 13 | Antriebsmutter |
| 1 | Kolben | 14 | Antriebsspindel |
| 2 | Längsachse | 15 | Konusfläche |
| 3 | Wandung | 16 | Einsatzteil |
| 4 | Außenseite | 17 | Verdrehsicherung |
| 5 | Innenseite | 18 | Rand |
| 6 | Nut | 19 | Kontur |
| 7 | Schulter | 20 | Gegenkontur |
| 8 | Schulterfläche | 21 | Freischnitt |
| 9 | Querschnittsfläche | 22 | Schlüsselflächenpaar |
| 10 | Übergangsbereich | 23 | Stützflächenpaar |
| 11 | Kolbenboden | 24 | Radius |
| 12 | Anlagefläche | 25 | Fase |
| | | | |
| α | Winkel | | |
| β | Winkel | | |

## Patentansprüche

1. Kolben (1) für einen Bremssattel einer Scheibenbremse, welcher in Umformprozessen aus einem metallischen Werkstoff, insbesondere aus einem ebenen Blech, hergestellt ist,
und als einseitig offener Topf mit einer Längsachse, mit einer Wandung und mit einem Kolbenboden (11) ausgebildet ist, und mit einer axialen Anlagefläche (12) an einen Bremsbelag anlegbar ist, sowie mit wenigstens einem Verdrehsicherungsmittel zwischen Kolben (1) und Antriebsmutter (13), und das Verdrehsicherungsmittel wenigstens eine integrierte Armierung aufweist, die dazu dient, den Kolben (1) gegen plastische Deformation durch die Antriebsmutter (13) zu schützen, **dadurch gekennzeichnet, dass** ein Rand (18) vom Kolben (1) eine asymmetrisch in Richtung Längsachse (2) nach radial innen weisende Profilierung aufweist, und dass eine zugeordnete Profilierung der Antriebsmutter (13) symmetrisch ausgebildet ist.

2. Kolben (1) nach Anspruch 1, **dadurch gekennzeichnet, dass** die Armierung als geometrisch nicht deckungsgleiche, drehsteife Profilierung einer Kontur (19) von Kolben (1) und oder einer Gegenkontur (20) einer Antriebsmutter (13), sowie mit wenigstens einem Freischnitt (21,21',21",21'") ausgebildet ist.

3. Kolben (1) nach einem oder mehreren der vorhergehenden Ansprüche, **dadurch gekennzeichnet, dass** die Kontur (19) am Kolben (1) und die Gegenkontur (20) an der Antriebsmutter (13) zur Ausbildung von Mitnehmern jeweils wenigstens zwei, zueinander parallel angeordnete, sowie einander diametral gegenüber liegend platzierte, Schlüsselflächenpaare (11,22') ausbilden.

4. Kolben (1) nach einem oder mehreren der vorhergehenden Ansprüche, **dadurch gekennzeichnet, dass** die Kontur (19) am Kolben (1) und die Gegenkontur an der Antriebsspindel (13) wenigstens zwei, zueinander parallel angeordnete, sowie zueinander diametral gegenüber liegend platzierte, Stützflächenpaare (23,23') ausbilden.

5. Kolben (1) nach einem oder mehreren der vorhergehenden Ansprüche, **dadurch gekennzeichnet, dass** dass die Kontur (19) am Rand (18) vom Kolben (1) als asymmetrischkleeblattförmige Innenkontur ausgebildet ist.

6. Kolben (1) nach Anspruch 4, **dadurch gekennzeichnet, dass** Stützflächenpaare (23,23') und Schlüsselflächenpaare (22,22') regelmäßig im Winkel (β) zueinander abwechselnd versetzt vorgesehen sind.

7. Kolben (1) nach einem oder mehreren der vorhergehenden Ansprüche, **dadurch gekennzeichnet, dass** der Kolben (1) wenigstens ein Einsatzteil (16) aufnimmt, und wobei der Rand (18) das Einsatzteil (16) zumindest teilweise formschlüssig übergreift.

## Claims

1. Piston (1) for a brake caliper of a disk brake, which piston (1) is produced by forming processes from a metallic material, in particular from a flat metal sheet, and which piston (1) is designed as a pot which is open on one side and which has a longitudinal axis, a wall and a piston head (11), and can be placed against a brake pad by means of an axial contact surface (12), and which piston (1) has at least one twist prevention means between the piston (1) and a drive nut (13), and the twist prevention means has at least one integrated reinforcement, which serves to protect the piston (1) against plastic deformation by the drive nut (13), **characterized in that** a rim (18) of the piston (1) has a profiling which points radially inward asymmetrically in the direction of the longitudinal axis (2), and **in that** an associated profiling of the drive nut (13) is of symmetrical design.

2. Piston (1) according to Claim 1, **characterized in that** the reinforcement is designed as a geometrically non-congruent, torsionally rigid profiling of a contour (19) of the piston (1) and/or of a mating contour (20) of a drive nut (13), and with at least one clearance cut (21, 21', 21", 21"').

3. Piston (1) according to one or more of the preceding claims, **characterized in that** the contour (19) on the piston (1) and the mating contour (20) on the drive nut (13) each form at least two pairs of flats (11, 22'), which are arranged parallel to one another and positioned diametrically opposite one another to form driving features.

4. Piston (1) according to one or more of the preceding claims, **characterized in that** the contour (19) on the piston (1) and the mating contour on the drive spindle (13) each form at least two pairs of supporting surfaces (23, 23'), which are arranged parallel to one another and positioned diametrically opposite one another.

5. Piston (1) according to one or more of the preceding claims, **characterized in that** the contour (19) on the rim (18) of the piston (1) is designed as an inner contour of asymmetric clover leaf shape.

6. Piston (1) according to Claim 4, **characterized in that** pairs of supporting surfaces (23, 23') and pairs of flats (22, 22') are provided alternately and offset at regular intervals at an angle (β) to one another.

7. Piston (1) according to one or more of the preceding claims, **characterized in that** the piston (1) receives at least one insert (16), and wherein the rim (18) overlaps the insert (16) at least partially in a positive manner.

## Revendications

1. Piston (1) pour un étrier de frein d'un frein à disque, qui est fabriqué dans des processus de formage à partir d'un matériau métallique, en particulier à partir d'une tôle plane, et qui est réalisé sous forme de pot ouvert d'un côté avec un axe longitudinal, avec une paroi et avec un fond de piston (11), et qui peut être appliqué par une surface d'appui axiale (12) contre une garniture de frein, et comprenant au moins un moyen de fixation en rotation entre le piston (1) et l'écrou d'entraînement (13), et le moyen de fixation en rotation présentant au moins une armature intégrée qui sert à protéger le piston (1) contre une déformation plastique par l'écrou d'entraînement (13), **caractérisé en ce qu'**un bord (18) du piston (1) présente un profilage orienté radialement vers l'intérieur de manière asymétrique dans la direction de l'axe longitudinal (2), et **en ce qu'**un profilage associé de l'écrou d'entraînement (13) est réalisé de manière symétrique.

2. Piston (1) selon la revendication 1, **caractérisé en ce que** l'armature est réalisée sous forme de profilage géométriquement non coïncident, rigide en torsion, d'un contour (19) du piston (1) et/ou d'un contour conjugué (20) d'un écrou d'entraînement (13), et avec au moins une contre-dépouille (21, 21', 21", 21"').

3. Piston (1) selon l'une quelconque ou plusieurs des revendications précédentes, **caractérisé en ce que** le contour (19) au niveau du piston (1) et le contour conjugué (20) au niveau de l'écrou d'entraînement (13) pour réaliser des dispositifs d'entraînement constituent à chaque fois au moins deux paires de surfaces de clé (11, 22') disposées parallèlement l'une à l'autre et placées de manière diamétralement opposée.

4. Piston (1) selon l'une quelconque ou plusieurs des revendications précédentes, **caractérisé en ce que** le contour (19) au niveau du piston (1) et le contour conjugué au niveau de la broche d'entraînement (13) présentent au moins deux paires de surfaces de support (23, 23') disposées parallèlement l'une à l'autre et placées de manière diamétralement opposée.

5. Piston (1) selon l'une quelconque ou plusieurs des revendications précédentes, **caractérisé en ce que** le contour (19) au niveau du bord (18) du piston (1) est réalisé sous forme de contour interne en forme de trèfle asymétrique.

6. Piston (1) selon la revendication 4, **caractérisé en ce que** des paires de surfaces de support (23, 23') et des paires de surfaces de clé (22, 22') sont prévues de manière décalée en alternance les unes par rapport aux autres régulièrement suivant un angle (β).

7. Piston (1) selon l'une quelconque ou plusieurs des revendications précédentes, **caractérisé en ce que** le piston (1) reçoit au moins une pièce d'insertion (16), et le bord (18) venant en prise par le dessus avec la pièce d'insertion (16) au moins en partie avec engagement par correspondance de formes.
